# EUROPÄISCHE PATENTSCHRIFT

(11) **EP 3 769 905 B1**
(45) Veröffentlichungstag und Bekanntmachung des Hinweises auf die Patenterteilung: **22.12.2021**
(21) Anmeldenummer: 19188407.1
(22) Anmeldetag: 25.07.2019
(51) Int. Cl.: B23P 21/00, B62D 65/18, B62D 65/02, B23K 37/047, B23K 37/04, B23K 31/02, B23K 101/00, B23K 101/18

(54) **VORRICHTUNG ZUM POSITIONIEREN VON KRAFTFAHRZEUGTEILEN UND VERFFAHREN ZUM WAHLWEISEN KONFIGURATION EINER SOLCHEN VORRICHTUNG.**
DEVICE FOR POSITIONING MOTOR VEHICLE PARTS AND METHOD FOR SELECTIVELY CONFIGURING SUCH A DEVICE
DISPOSITIF DE POSITIONNEMENT DE PIÈCES DE VÉHICULE AUTOMOBILE ET PROCÉDÉ POUR CONFIGURER SÉLECTIVEMENT UN TEL DISPOSITIF

(43) Veröffentlichungstag der Anmeldung: 27.01.2021
(60) Teilanmeldung: 21208005.5
(73) Patentinhaber: MAGNA STEYR Fahrzeugtechnik AG & Co KG, 8041 Graz (AT)
(72) Erfinder: KRIBERNEGG, Christoph, 8451 Leibnitz (AT); LEONHARDSBERGER, Patrick, 8045 Graz (AT); Mayer, Thomas, 8081 Frannach (AT); PICHLER, Manfred, 8010 Graz (AT)
(74) Vertreter: Zangger, Bernd

(56) Entgegenhaltungen:
- CN-A- 105 882 789
- CN-B- 104 148 860
- CN-U- 205 184 073
- DE-A1- 19 820 094
- DE-U1-202010 003 829
- DE-U1-202016 101 411
- DE-U1-202017 102 155
- JP-A- H05 277 848
- US-A1- 2018 273 243
- DATABASE WPI Week 201776 Thomson Scientific, London, GB; AN 2017-72313M XP002796675, -& CN 107 263 133 A (SICHUAN MINGRI AEROSPACE IND CO LTD) 20. Oktober 2017 (2017-10-20)

## Beschreibung

### Gebiet der Erfindung

Die vorliegende Erfindung betrifft eine Vorrichtung zum Positionieren von Kraftfahrzeugteilen zur Produktion von Kraftfahrzeugen gemäss dem Oberbegriff des Anspruchs 1 und ein Verfahren zur wahlweisen Konfiguration einer solchen Vorrichtung für das Positionieren von Kraftfahrzeugteilen zur Produktion von Kraftfahrzeugen eines ersten Kraftfahrzeugtyps und zur Produktion von Kraftfahrzeugen eines zweiten Kraftfahrzeugtyps.

### Stand der Technik

Die automatisierte Produktion von Kraftfahrzeugen ist heute hinlänglich bekannt. Insbesondere Karosserieteile und/oder Fahrgestellteile werden üblicherweise entlang einer Produktionsstraße in verschiedenen Arbeitsstationen mit weiteren Anbauteilen ausgestattet oder zu größeren Fahrzeugmodulen zusammengesetzt. Dabei ist es zunehmend erforderlich, unterschiedliche Kraftfahrzeugtypen mit möglichst geringem zeitlichem Abstand in den selben Arbeitsstationen herstellen zu können. Für die Herstellung unterschiedlicher Kraftfahrzeugtypen ist üblicherweise ein Umbau der Arbeitsstation erforderlich. Da die Teile unterschiedlicher Kraftfahrzeugtypen meist unterschiedliche Geometrie aufweisen, müssen beispielsweise Positionier- und Haltevorrichtungen für die Kraftfahrzeugteile umgebaut oder ausgewechselt werden.

Die DE 198 20 094 A1 offenbart beispielsweise eine Anlage zum Positionieren und Verschweißen von Karosserieteilen unterschiedlicher Kfz-Typen mit einem auf einer Förderbahn geführten Montagerahmen, der Aufnahmen für zumindest einige Karosserieteile aufweist, mit Positioniereinrichtungen für die Karosserieteile und mit wenigstens einem für Schweißarbeiten einsetzbaren Roboter, wobei der Montagerahmen Positioniereinrichtungen für zumindest einige Karosserieteile und von außen betätigbare Spanneinrichtungen für die Karosserieteile aufweist, wobei unter der Förderbahn eine weitere Förderbahn angeordnet ist, auf der jeweils einer von mehreren Montagehilfsrahmen geführt ist, wobei neben der unteren Förderbahn Parkpositionen für die Montagehilfsrahmen vorgesehen sind, wobei die Montagehilfsrahmen jeweils Aufnahmen für weitere Karosserieteile unterschiedlicher Kfz-Typen sowie Einrichtungen zum Positionieren und Verspannen mit dem Montagerahmen aufweisen und wobei eine Hubvorrichtung für den Montagehilfsrahmen vorgesehen ist.

Die US 2018/273243 A1 offenbart die Merkmale des Oberbegriffs des Anspruchs 1.

### Zusammenfassung der Erfindung

Es ist eine Aufgabe der Erfindung, eine Vorrichtung zum Positionieren von Kraftfahrzeugteilen zur Produktion von Kraftfahrzeugen anzugeben, die eine einfache und rasche Umstellung auf verschiedene Fahrzeugtypen erlaubt und ein Verfahren zur wahlweisen Konfiguration einer solchen Vorrichtung für das Positionieren von Kraftfahrzeugteilen zur Produktion von Kraftfahrzeugen eines ersten Kraftfahrzeugtyps und zur Produktion von Kraftfahrzeugen eines zweiten Kraftfahrzeugtyps.

Die Lösung der Aufgabe erfolgt durch eine Vorrichtung zum Positionieren von Kraftfahrzeugteilen zur Produktion von Kraftfahrzeugen, mit den Merkmalen gemäß Anspruch 1. Erfindungsgemäß erfolgt das Halten von Kraftfahrzeugteilen zur weiteren Bearbeitung mittels Aufnahmen, die üblicherweise genau auf die aufzunehmenden Kraftfahrzeugteile abgestimmt sind und somit kraftfahrzeugtypabhängig ausgebildet sind. Diese Aufnahmen werden aber nicht direkt beispielsweise an einen Rahmen einer Arbeitsstation bzw. Vorrichtung befestigt, sondern vielmehr an einer austauschbaren Dockingplatte, also einem im wesentlichen plattenförmigen Element, das auf einfache Weise, bevorzugt auch automatisiert, insbesondere mittels Greifsystemen bzw. Robotern, in einem Grundmodul fixierbar ist, befestigt. Zur Herstellung eines unterschiedlichen Kraftfahrzeugtyps kann daher auf einfache Weise und insbesondere automatisiert die Dockingplatte der Vorrichtung gewechselt werden, so dass auch neue, passende Aufnahmen für die neuen Kraftfahrzeugteile bereitgestellt werden.

Vorteilhafte Ausgestaltungen der Vorrichtung sind in den abhängigen Ansprüchen angegeben.

Erfindungsgemäß umfasst die Dockingplatte Bolzen, nämlich Einzugsspannbolzen, wobei die Dockingplatte mittels der Bolzen im Grundmodul positionsgenau fixiert ist. Besonders bevorzugt umfasst die Dockingplatte zwei oder vier Bolzen bzw. Einzugsspannbolzen, die insbesondere im Bereich der Ecken einer viereckigen Dockingplatte angebracht sein können. Die Bolzen sind bevorzugt in Verwendungslage an der Unterseite der Dockingplatte ausgebildet und stehen bevorzugt vertikal nach unten ab.

Das Grundmodul umfasst erfindungsgemäß zumindest eine Spannvorrichtung, nämlich zumindest eine Nullpunktspannvorrichtung, die dazu ausgebildet ist Bolzen, nämlich Einzugsspannbolzen, einzuspannen und / oder auf sonstige Weise die Dockingplatte auf dem Grundmodul zu fixieren und/oder zu verriegeln. Erfindungsgemäß bildet das Grundmodul ein sogenanntes Nullpunktspannsystem und / oder Nullpunktverriegelungssystem zur positionsgenauen Aufnahme einer Dockingplatte aus.

Ein an einem Grundrahmen fix montiertes Grundmodul mit ein oder mehreren Nullpunktspannvorrichtungen und zumindest einer am Grundmodul tauschbaren bzw. lösbaren Dockingplatte kann zusammen ein "Dockingmodul" bilden.

Bevorzugt umfasst das Grundmodul eine Medienschnittstelle, wobei dem Grundmodul über die Medienschnittstelle ein Medium zuführbar ist, insbesondere Druckluft und/oder elektrische Signale und/oder Strom. Die Druckluft kann dazu dienen, um die an der Dockingplatte befindlichen Einzugspannbolzen am Grundmodul, insbesondere am Nullpunktsystem zu arretieren. Die Übertragung von Strom und / oder elektrischer Signale in das Grundmodul kann auch induktiv erfolgen.

Die Aufnahmen können Auflagen, Konsolen und/oder Spanner umfassen. Die Aufnahmen können insbesondere kraftfahrzeugtypspezifisch ausgebildet sein. Die Aufnahmen können als getrennte Bauteile ausgebildet sein und an der Dockingplatte befestigt, insbesondere lösbar und auswechselbar, befestigt sein.

Bevorzugt umfasst die Dockingplatte Halteelemente, beispielsweise Bolzen, Spannbolzen oder ähnliche Elemente, die dazu ausgebildet sind, dass die Dockingplatte mittels eines an den Haltelementen angreifenden Greifsystems an dem Grundmodul positioniert werden kann und/oder vom Grundmodul entfernt werden kann.

Die Vorrichtung umfasst vorzugsweise zumindest ein Greifsystem, insbesondere einen Roboter, wobei das Greifsystem dazu ausgebildet ist, die Dockingplatte an dem Grundmodul zu positionieren und/oder vom Grundmodul zu entfernen. Die Dockingplatte wird vorzugsweise vom Greifsystem, insbesondere Roboter, aus einem Lager geholt um am Grundmodul angebracht zu werden und nach dem Entfernen vom Grundmodul vom Greifsystem in einem Lager abgestellt.

Erfindungsgemäß umfasst die Vorrichtung zumindest eine weitere automatisiert austauschbare Dockingplatte, wobei die weitere Dockingplatte im selben Grundmodul positionsgenau fixierbar ist, in welchem die Dockingplatte fixierbar ist, wobei weitere Aufnahmen an der weiteren Dockingplatte ausgebildet sind und wobei die weiteren Aufnahmen der weiteren Dockingplatte verschieden von den Aufnahmen der Dockingplatte ausgebildet sind. In einem Grundmodul sind daher zwei verschieden ausgebildete Dockingplatten fixierbar. Die verschiedenen Dockingplatten können zur Herstellung verschiedener Fahrzeugtypen verwendet werden. Der Grundrahmen und die Grundmodule müssen dafür nicht getauscht werden.

Vorzugsweise umfasst die Vorrichtung zumindest zwei, bevorzugt zumindest drei Grundmodule und zumindest zwei, bevorzugt zumindest drei, automatisiert austauschbare Dockingplatten, wobei die Dockingplatten in einem jeweiligen Grundmodul positionsgenau fixierbar oder fixiert sind, wobei an jeder Dockingplatte Aufnahmen ausgebildet sind. In einem Grundrahmen können somit mehrere Grundmodule zur gleichzeitigen Fixierung mehrerer Dockingplatten ausgebildet sein.

Ein Verfahren zur wahlweisen Konfiguration einer Vorrichtung nach zumindest einem der Ansprüche 1 bis 6, für das Positionieren von Kraftfahrzeugteilen zur Produktion von Kraftfahrzeugen eines ersten Kraftfahrzeugtyps und zur Produktion von Kraftfahrzeugen eines zweiten Kraftfahrzeugtyps, umfasst die Schritte, dass das Grundmodul zur Produktion von Kraftfahrzeugen des ersten Kraftfahrzeugtyps automatisiert mit einer Dockingplatte ausgestattet wird, wobei an der Dockingplatte Aufnahmen ausgebildet sind, die dazu ausgebildet sind, Kraftfahrzeugteile eines Kraftfahrzeugs des ersten Kraftfahrzeugtyps zu halten, und dass das Grundmodul zur Produktion von Kraftfahrzeugen des zweiten Kraftfahrzeugtyps automatisiert mit einer weiteren Dockingplatte ausgestattet wird, wobei an der weiteren Dockingplatte weitere Aufnahmen ausgebildet sind, die dazu ausgebildet sind, Kraftfahrzeugteile eines Kraftfahrzeugs des zweiten Kraftfahrzeugtyps zu halten.

Zur Neukonfiguration einer erfindungsgemäßen Vorrichtung, zur Herstellung eines anderen Kraftfahrzeugtypes, können daher Grundrahmen und Grundmodule weiter verwendet werden und lediglich die eingespannten Dockingplatten mit ihren fahrzeugtypspezifischen Aufnahmen werden ausgetauscht.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung einer erfindungsgemäßen Vorrichtung zum Positionieren von Kraftfahrzeugteilen.
- Fig. 2: ist eine dreidimensionale Darstellung eines Grundmoduls und einer Dockingplatte der Vorrichtung gemäß Fig. 1 von oben.
- Fig. 3: ist eine dreidimensionale Darstellung einer Dockingplatte der Vorrichtung gemäß Fig. 1 von unten, ohne Aufnahmen.
- Fig. 4: ist eine dreidimensionale Darstellung einer Dockingplatte der Vorrichtung gemäß Fig. 1 von unten, mit Aufnahmen.

### Detaillierte Beschreibung der Erfindung

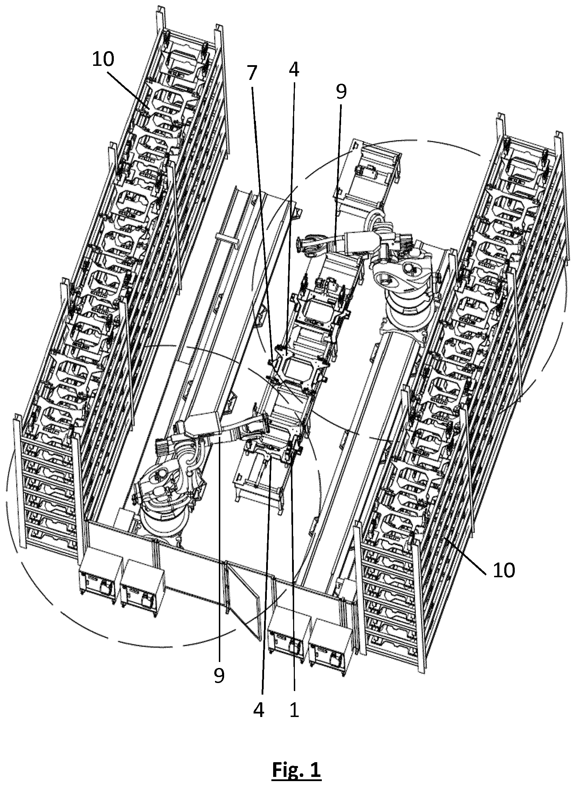

In Fig. 1 ist eine erfindungsgemäße Vorrichtung zum Positionieren von Kraftfahrzeugteilen zur Produktion von Kraftfahrzeugen dargestellt.

Die Kraftfahrzeugteile können auf Dockingplatten 4 positioniert werden, zur weiteren Bearbeitung, insbesondere zur Ausstattung mit zusätzlichen Komponenten des herzustellenden Kraftfahrzeuges.

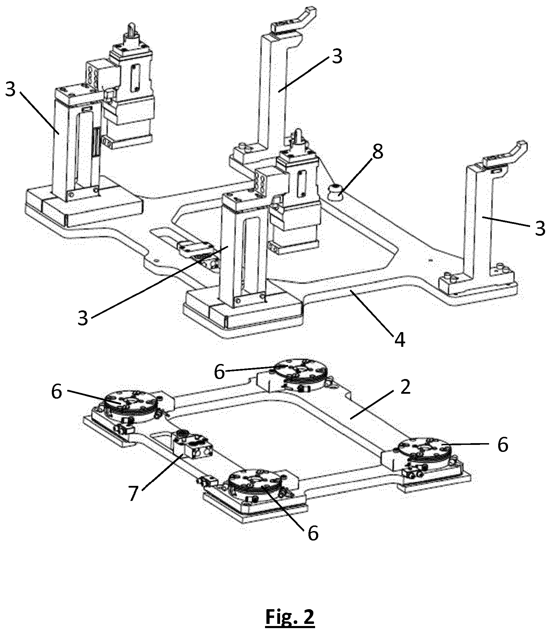

Mehrere Dockingplatten 4 können an einem gemeinsamen Grundrahmen 1, auf Grundmodulen 2 (dargestellt in Fig. 2), aufgenommen werden. Die Grundmodule 2 und die Dockingplatten 4 weisen eine flache Form auf. Von oben betrachtet weisen Grundmodule 2 und Dockingplatten 4 eine rechteckige oder quadratische Form auf. Insbesondere können Grundmodule 2 und Dockingplatten 4 im Wesentlichen einen rechteckigen oder quadratischen Rahmen bilden, wobei der Rahmen einer Dockingplatte 4 im Wesentlichen auf den Rahmen eines Grundmoduls 2 passt.

Die Dockingplatten 4 werden in einem Lager 10, beispielsweise seitlich des Grundrahmens 1, bereitgehalten und können durch Greifsysteme 9, insbesondere an Robotern, aus ihrem Platz im Lager 10 entnommen und auf den Grundmodulen 2 positioniert werden, zur Bereitstellung geeigneter Aufnahmen 3 (dargestellt in Fig. 2) zur Herstellung eines bestimmten Fahrzeugtyps.

Die Vorrichtung umfasst somit einen Grundrahmen 1, mehrere am Grundrahmen 1 angeordnete Grundmodule 2, sowie automatisiert austauschbare Dockingplatten 4, wobei die Dockingplatten 4 in den Grundmodulen 2 positionsgenau fixiert werden können. Bevorzugt weisen alle Grundmodule 2 und alle Dockingplatten 4 die selben Dimensionen auf, so dass alle Dockingplatten 4 beliebig auf allen Grundmodulen 2 fixiert werden können.

Wie in Fig. 2 dargestellt, sind an den Dockingplatten jeweils mehrere, beispielsweise jeweils vier Aufnahmen 3 ausgebildet, um mittels der Aufnahmen 3 Kraftfahrzeugteile in einer vorgegebenen Position halten zu können. Die Aufnahmen 3 können Auflagen, Konsolen und/oder Spanner und / oder ein-/ausziehbare Positionierstifte umfassen.

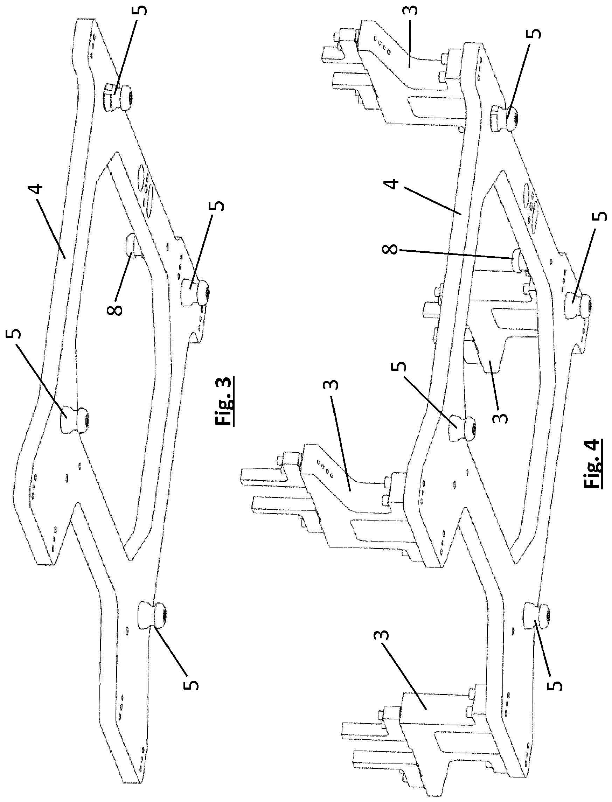

Wie in Fig. 3 und Fig. 4 gut ersichtlich, weist eine Dockingplatte 4 an ihrer Unterseite Bolzen 5 auf, insbesondere jeweils vier Einzugsspannbolzen, sodass die Dockingplatte 4 mittels der Bolzen 5 in einem Grundmodul 2 positionsgenau fixiert werden kann.

Ein Grundmodul 2 weist daher, wie in Fig. 2 dargestellt, vier entsprechend positionierte Spannvorrichtungen 6 auf, nämlich Nullpunktspannvorrichtungen, die dazu ausgebildet sind, die Bolzen 5, nämlich Einzugsspannbolzen, einer Dockingplatte 4 einzuspannen. Das Grundmodul 2 bildet hierdurch ein Nullpunktspannsystem aus.

Ein Grundmodul 2 kann eine Medienschnittstelle 7 umfassen, wobei dem Grundmodul 2 über die Medienschnittstelle 7 ein Medium zuführbar ist, insbesondere Druckluft und/oder elektrische Signale und/oder Strom. Die Druckluft kann beispielsweise dazu dienen, um an der Dockingplatte 4 befindliche Einzugspannbolzen 5 mittels Spannvorrichtungen 6, vorzugsweise Nullpunktspannvorrichtungen, am Nullpunktsystem bzw. am Grundmodul 2 zu arretieren.

Eine Dockingplatte 4 umfasst auch Halteelemente 8, beispielsweise wieder Bolzen, Spannbolzen, oder dergleichen, wobei die Halteelemente vorzugsweise an der Oberseite der Dockingplatten 4 angeordnet sind. Die Halteelemente 8 sind dazu ausgebildet, dass die Dockingplatten 4 mittels eines an den Haltelementen 8 angreifenden Greifsystems 9 (Fig. 1) an dem Grundmodul 2 positioniert werden können und/oder vom Grundmodul 2 entfernt werden können.

Zur wahlweisen Konfiguration einer solchen Vorrichtung für das Positionieren von Kraftfahrzeugteilen zur Produktion von Kraftfahrzeugen eines ersten Kraftfahrzeugtyps, wird ein Grundmodul 2 automatisiert, bevorzugt mittels Greifsystem 9, mit einer Dockingplatte 4 ausgestattet, wobei an der Dockingplatte 4 Aufnahmen 3 ausgebildet sind, die dazu ausgebildet sind, Kraftfahrzeugteile eines Kraftfahrzeugs des ersten Kraftfahrzeugtyps zu halten.

Zur wahlweisen Konfiguration einer solchen Vorrichtung für das Positionieren von Kraftfahrzeugteilen zur Produktion von Kraftfahrzeugen eines zweiten Kraftfahrzeugtyps, wird das Grundmodul 2 automatisiert, bevorzugt mittels Greifsystem 9, mit einer weiteren, also anderen Dockingplatte 4 ausgestattet, wobei an der weiteren Dockingplatte 4 weitere Aufnahmen 3 ausgebildet sind, die dazu ausgebildet sind, Kraftfahrzeugteile eines Kraftfahrzeugs des zweiten Kraftfahrzeugtyps zu halten. Die weiteren Aufnahmen 3 sind also zumindest teilweise verschieden von den Aufnahmen 3, so dass nur andere Kraftfahrzeugteile bzw. Kraftfahrzeugteile auf andere Weise positioniert werden können, um einen anderen Kraftfahrzeugtyp herzustellen.

### Bezugszeichenliste

- 1: Grundrahmen
- 2: Grundmodul
- 3: Aufnahme
- 4: Dockingplatte
- 5: Bolzen
- 6: Spannvorrichtung
- 7: Medienschnittstelle
- 8: Haltelement
- 9: Greifsystem
- 10: Lager

## Patentansprüche

1. Vorrichtung zum Positionieren von Kraftfahrzeugteilen zur Produktion von Kraftfahrzeugen, umfassend einen Grundrahmen (1), zumindest ein am Grundrahmen (1) angeordnetes Grundmodul (2), sowie Aufnahmen (3), die dazu ausgebildet sind, die Kraftfahrzeugteile zu halten,
wobei die Vorrichtung zumindest eine automatisiert austauschbare Dockingplatte (4) umfasst, wobei die Dockingplatte (4) im Grundmodul (2) fixierbar ist, wobei die Aufnahmen (3) an der Dockingplatte (4) ausgebildet sind, **dadurch gekennzeich** - **net**, dass die Dockingplatte (4) Bolzen (5), nämlich Einzugsspannbolzen, umfasst, wobei die Dockingplatte (4) mittels der Bolzen (5) im Grundmodul (2) positionsgenau fixierbar ist, wobei das Grundmodul (2) zumindest eine Spannvorrichtung (6), nämlich zumindest eine Nullpunktspannvorrichtung, umfasst, die dazu ausgebildet ist, eine Dockingplatte (4) zu fixieren und/oder zu verriegeln, nämlich zumindest einen Bolzen (5) einer Dockingplatte (4) einzuspannen, wobei die Vorrichtung zumindest eine weitere automatisiert austauschbare Dockingplatte (4) umfasst, wobei die weitere Dockingplatte (4) im selben Grundmodul (2) positionsgenau fixierbar ist, in welchem die Dockingplatte (4) fixierbar ist, wobei weitere Aufnahmen (3) an der weiteren Dockingplatte (4) ausgebildet sind und wobei die weiteren Aufnahmen (3) der weiteren Dockingplatte (4) verschieden von den Aufnahmen (3) der Dockingplatte (4) ausgebildet sind.

2. Vorrichtung nach Anspruch 1,
**dadurch gekennzeichnet , dass** das Grundmodul (2) eine Medienschnittstelle (7) umfasst, wobei dem Grundmodul (2) über die Medienschnittstelle (7) ein Medium zuführbar ist, insbesondere Druckluft und/oder elektrische Signale und/oder Strom.

3. Vorrichtung nach zumindest einem der vorhergehenden Ansprüche, **dadurch gekennzeichnet , dass** die Aufnahmen (3) Auflagen, Konsolen und/oder Spanner umfassen.

4. Vorrichtung nach zumindest einem der vorhergehenden Ansprüche, **dadurch gekennzeichnet , dass** die Dockingplatte (4) Halteelemente (8) umfasst, die dazu ausgebildet sind, dass die Dockingplatte (4) mittels eines an den Haltelementen (8) angreifenden Greifsystems (9) an dem Grundmodul (2) positioniert werden kann und/oder vom Grundmodul (2) entfernt werden kann.

5. Vorrichtung nach zumindest einem der vorhergehenden Ansprüche, **dadurch gekennzeichnet , dass** die Vorrichtung zumindest ein Greifsystem (9), insbesondere einen Roboter, umfasst, wobei das Greifsystem (9) dazu ausgebildet ist, die Dockingplatte (4) an dem Grundmodul (2) zu positionieren und/oder vom Grundmodul (2) zu entfernen.

6. Vorrichtung nach zumindest einem der vorhergehenden Ansprüche, **dadurch gekennzeichnet , dass** die Vorrichtung zumindest zwei, bevorzugt zumindest drei Grundmodule (2) umfasst und zumindest zwei, bevorzugt zumindest drei, automatisiert austauschbare Dockingplatten (4) umfasst, wobei die Dockingplatten (4) in einem jeweiligen Grundmodul (2) positionsgenau fixierbar sind, wobei an jeder Dockingplatte (4) Aufnahmen (3) ausgebildet sind.

7. Verfahren zur wahlweisen Konfiguration einer Vorrichtung nach zumindest einem der vorhergehenden Ansprüche für das Positionieren von Kraftfahrzeugteilen zur Produktion von Kraftfahrzeugen eines ersten Kraftfahrzeugtyps und zur Produktion von Kraftfahrzeugen eines zweiten Kraftfahrzeugtyps, wobei das Grundmodul (2) zur Produktion von Kraftfahrzeugen des ersten Kraftfahrzeugtyps automatisiert mit einer Dockingplatte (4) ausgestattet wird, wobei an der Dockingplatte (4) Aufnahmen (3) ausgebildet sind, die dazu ausgebildet sind, Kraftfahrzeugteile eines Kraftfahrzeugs des ersten Kraftfahrzeugtyps zu halten, wobei das Grundmodul (2) zur Produktion von Kraftfahrzeugen des zweiten Kraftfahrzeugtyps automatisiert mit einer weiteren Dockingplatte (4) ausgestattet wird, wobei an der weiteren Dockingplatte (4) weitere Aufnahmen (3) ausgebildet sind, die dazu ausgebildet sind, Kraftfahrzeugteile eines Kraftfahrzeugs des zweiten Kraftfahrzeugtyps zu halten.

## Claims

1. Device for positioning motor vehicle parts for producing motor vehicles, comprising a mainframe (1), at least one main module (2) which is disposed on the mainframe (1), as well as receptacles (3) which are configured for holding the motor vehicle parts,
wherein the device comprises at least one docking plate (4) that is interchangeable in an automated manner, wherein the docking plate (4) is capable of being fixed in the main module (2), wherein the receptacles (3) are configured on the docking plate (4),
**characterized in that** the docking plate (4) comprises bolts (5), specifically retractive clamping bolts, wherein the docking plate (4) by means of the bolts (5) is capable of being fixed in a positionally accurate manner in the main module (2), wherein the main module (2) comprises at least one clamping device (6), specifically at least one zero-point clamping device, which is configured for fixing and/or locking a docking plate (4), specifically for clamping at least one bolt (5) of a docking plate (4), wherein the device comprises at least one further docking plate (4) that is interchangeable in an automated manner, wherein the further docking plate (4) is capable of being fixed in a positionally accurate manner in the same main module (2) in which the docking plate (4) is capable of being fixed, wherein further receptacles (3) are configured on the further docking plate (4), and wherein the further receptacles (3) of the further docking plate (4) are configured differently from the receptacles (3) of the docking plate (4).

2. Device according to Claim 1,
**characterized in that** the main module (2) comprises a media interface (7), wherein a medium, in particular compressed air and/or electric signals and/or electric current, are/is able of being supplied to the main module (2) by way of the media interface (7).

3. Device according to at least one of the preceding claims,
**characterized in that** the receptacles (3) comprise bearing faces, consoles and/or tensioners.

4. Device according to at least one of the preceding claims,
**characterized in that** the docking plate (4) comprises holding elements (8) which are configured such that the docking plate (4) by means of a gripping system (9) that engages on the holding elements (8) is able to be positioned on the main module (2) and/or is able to be removed from the main module (2).

5. Device according to at least one of the preceding claims,
**characterized in that** the device comprises at least one gripping system (9), in particular a robot, wherein the gripping system (9) is configured for positioning the docking plate (4) on the main module (2) and/or for removing said docking plate (4) from the main module (2).

6. Device according to at least one of the preceding claims,
**characterized in that** the device comprises at least two, preferably at least three, main modules (2), and at least two, preferably at least three, docking plates (4) which are capable of being interchanged in an automated manner, wherein the docking plates (4) are capable of being fixed in a positionally accurate manner in a respective main module (2), wherein receptacles (3) are configured on each docking plate (4).

7. Method for selectively configuring a device according to at least one of the preceding claims for positioning motor vehicle parts for producing motor vehicles of a first type of motor vehicle and for producing motor vehicles of a second type of motor vehicle, wherein the main module (2) for producing motor vehicles of the first type of motor vehicle is equipped in an automated manner with a docking plate (4), wherein receptacles (3) which are configured for holding motor vehicle parts of a motor vehicle of the first type of motor vehicle are configured on the docking plate (4), wherein the main module (2) for producing motor vehicles of the second type of motor vehicle is equipped in an automated manner with a further docking plate (4), wherein further receptacles (3) which are configured for holding motor vehicle parts of a motor vehicle of the second type of motor vehicle are configured on the further docking plate (4).

## Revendications

1. Dispositif de positionnement de pièces de véhicule automobile destinées à la fabrication de véhicules automobiles, ledit dispositif comprenant un cadre de base (1), au moins un module de base (2) disposé sur le cadre de base (1), et des moyens de réception (3) destinés à recevoir les pièces de véhicule automobile, le dispositif comprenant au moins une plaque à accouplement (4) pouvant être remplacée automatiquement, la plaque à accouplement (4) pouvant être fixée dans le module de base (2), les moyens de réception (3) étant formés au niveau de la plaque à accouplement (4), **caractérisé en ce que** la plaque à accouplement (4) comprend des boulons (5), à savoir des boulons d'insertion et de serrage, la plaque à accouplement (4) pouvant être fixée à une position précise dans le module de base (2) au moyen des boulons (5), le module de base (2) comprenant au moins un dispositif de serrage (6), c'est-à-dire au moins un dispositif de serrage à point zéro, qui est conçu pour fixer et/ou verrouiller une plaque à accouplement (4), c'est-à-dire pour serrer au moins un boulon (5) d'une plaque à accouplement (4), le dispositif comprenant au moins une autre plaque à accouplement (4) pouvant être remplacée automatiquement, l'autre plaque à accouplement (4) pouvant être fixée à une position précise dans le même module de base (2) dans lequel la plaque à accouplement (4) peut être fixée, d'autres moyens de réception (3) étant formés au niveau de l'autre plaque à accouplement (4) et les autres moyens de réception (3) de l'autre plaque à accouplement (4) ayant une conception différente de celle des moyens de réception (3) de la plaque à accouplement (4).

2. Dispositif selon la revendication 1,
**caractérisé en ce que** le module de base (2) comprend une interface de milieu (7), un milieu pouvant être amené au module de base (2) par le biais de l'interface de milieu (7), en particulier de l'air comprimé et/ou des signaux électriques et/ou un courant.

3. Dispositif selon l'une au moins des revendications précédentes,
**caractérisé en ce que** les moyens de réception (3) incluent les supports, les consoles et/ou les moyens de serrage.

4. Dispositif selon l'une au moins des revendications précédentes, **caractérisé en ce que** la plaque à accouplement (4) comprend des éléments de retenue (8) qui sont conçus pour pouvoir positionner la plaque à accouplement (4) sur le module de base (2) au moyen d'un système de préhension (9) qui s'engage avec les éléments de retenue (8) et/ou pour pouvoir le retirer du module de base (2).

5. Dispositif selon l'une au moins des revendications précédentes, **caractérisé en ce que** le dispositif comprend au moins un système de préhension (9), notamment un robot, le système de préhension (9) étant conçu pour positionner la plaque à accouplement (4) sur le module de base (2) et/ou pour la retirer du module de base (2).

6. Dispositif selon l'une au moins des revendications précédentes, **caractérisé en ce que** le dispositif comprend au moins deux, de préférence au moins trois, modules de base (2) et comprend au moins deux, de préférence au moins trois, plaques à accouplement (4) qui peuvent être remplacées automatiquement, les plaques à accouplement (4) pouvant être fixées à une position précise dans un module de base respectif (2), des moyens de réception (3) étant formés sur chaque plaque à accouplement (4).

7. Procédé permettant de configurer au choix un dispositif selon l'une au moins des revendications précédentes afin de positionner des pièces de véhicule automobile destinées à la fabrication de véhicules automobiles d'un premier type de véhicule automobile et à la fabrication de véhicules automobiles d'un deuxième type de véhicule automobile, le module de base (2) étant équipé automatiquement d'une plaque à accouplement (4) destinée à la fabrication de véhicules automobiles du premier type de véhicule automobile, des moyens de réception (3) étant formés sur la plaque à accouplement (4), lesquels sont conçus pour maintenir des pièces d'un véhicule automobile du premier type de véhicule automobile, le module de base (2) étant équipé automatiquement d'une autre plaque à accouplement (4) destinée à la fabrication de véhicules automobiles du deuxième type de véhicule automobile, d'autres moyens de réception (3) étant formés sur l'autre plaque à accouplement (4), lesquels sont conçus pour maintenir des pièces d'un véhicule automobile du deuxième type de véhicule automobile.
